# EUROPÄISCHE PATENTANMELDUNG

(11) **EP 1 338 572 A1**
(43) Veröffentlichungstag der Anmeldung: **27.08.2003**
(21) Anmeldenummer: 03002579.5
(22) Anmeldetag: 07.02.2003
(51) Int. Cl.: C02F 5/12, C02F 1/56, C08G 69/08

(54) **Verfahren zur Verhinderung von Inkrustationen Phosphat-enthaltender Doppelsalze**

(30) Priorität: 20.02.2002 DE 10207088
(71) Anmelder: Bayer Aktiengesellschaft, 51368 Leverkusen (DE)
(72) Erfinder: Klein, Thomas, Dr., 50678 Köln (DE); Müller, Harry-Günter, 51429 Bergisch Gladbach (DE)

(57) **Zusammenfassung**

Die vorliegende Erfindung betrifft ein Verfahren zur Verhinderung von Inkrustationen Phosphat-enthaltender Doppelsalze, dadurch gekennzeichnet, dass man Polymere mit wiederkehrenden Succinyleinheiten oder deren Teilhydrolysate und/oder deren Salze auf Inkrustationen Phosphat-enthaltender Doppelsalze in stehenden oder fließenden Gewässern, die Phosphat-Ionen enthalten, einwirken lässt.

## Beschreibung

Die vorliegende Erfindung betrifft ein Verfahren zur Verhinderung von Inkrustationen Phosphat-enthaltender Doppelsalze, dadurch gekennzeichnet, dass man Polymere mit wiederkehrenden Succinyleinheiten oder deren Teilhydrolysate und/oder deren Salze, bevorzugt Natrium- oder Kaliumsalze, auf Inkrustationen Phosphat-enthaltender Doppelsalze in stehenden oder fließenden Gewässern, die Phosphat-Ionen enthalten, einwirken lässt oder potentiell zur Bildung von Ablagerungen aus Phosphat-enthaltenden Doppelsalzen fähigem Wasser zusetzt.

Bei der modernen Abwasserreinigung, beispielsweise in Kläranlagen, werden physikalische, chemische und biologische Verfahren miteinander kombiniert. In der biologischen Reinigungsstufe von Kläranlagen ist die möglichst vollständige Umwandlung (Mineralisierung) der leicht abbaubaren organischen Abwasseranteile zu anorganischen Endprodukten beispielsweise Wasser, Kohlendioxid, Ammoniumionen, Nitrationen, Phosphationen oder Sulfationen das Ziel. Das vorgeklärte Wasser wird mit Belebtschlamm versetzt. Als Bioreaktoren der Kläranlagen dienen Belebungstürme und/oder -becken, in denen das Abwasser-Belebtschlamm-Gemisch ständig umgewälzt und belüftet wird.

Der Schlamm setzt sich ab und wird größtenteils über Kreiselpumpen in die Türme zurückgeführt. Der Überschussschlamm wird abgezogen. In der Flotation werden feindisperse Schlammanteile durch ausgasende Luft an die Oberfläche getragen und abgekämmt. Die vereinigten Schlämme werden entwässert und der Schlammverbrennung zugeführt oder auch in Schlammfaulungsanlagen aufgearbeitet.

In der biologischen Reinigung wandeln Bakterien hochmolekulare organische Schmutzstoffe unter aneraoben Bedingungen zu H₂S, CO₂ und Zwischenprodukten wie Alkohol und organische Säuren um, die dann dem Endabbau von Methanbakterien zugeführt werden (Endprodukte: 70% Methan, 30% CO₂ im Faulgas, CO₂, NH₃ und H₂S gelöst im Faulwasser).

In Kläranlagen kommt es dabei im wesentlichen zur Bildung von Ablagerungen aufgrund von CO₂-Ausgasung, pH-Wert-Veränderungen oder Temperaturveränderungen.

Diese Ablagerungen entstehen durch Abbauprozesse in der Turm- oder Beckenbiologie, wo der Anteil gelöster organischer Substanzen wesentlich reduziert wird. Dabei entstehen erhebliche Mengen an Kohlendioxid und Ammoniak. Durch die damit verbundene Bildung von Ammoniumhydrogencarbonat entsteht ein Puffersystem (pH 6,5-7,5), in dem Magnesiumionen und Calziumionen in Lösung gehalten werden. Je nach Schlammkonzentration kann der Gehalt an Ammoniumhydrogencarbonat deutlich über 5000 mg/l ansteigen.

Der Abbau von Biomasse lässt auch die Konzentration von Phosphationen ansteigen. Der Orthophosphatgehalt des Schlammwassers ist nach den bisherigen Erfahrungen zwischen 25 bis 100mg/l zu erwarten, sofern eine chemische Phosphatfällung vorgenommen wurde.

Ist eine biologische Phosphatelimination vorausgegangen, so ist mit deutlich höheren Werten bis zu 1000mg/l zu rechnen. Die Folge davon ist, dass es unter nahezu neutralen pH-Wert Bedingungen Inkrustationen von Phosphat-enthaltenen Doppelsalzen wie beispielsweise Hydroxylapatit oder Magnesiumammoniumphosphat kommt.

So fällt beispielsweise Hydroxylapatit Ca₅((PO₄)₃(OH)), bei einem pH von ca. 8 aus. Inkrustationen aus diesem Salz sind dann bevorzugt, wenn die Konzentration sowohl von Ca-Ionen (>80mg/l) als auch die der Phosphat-Ionen (>60mg/l) hoch ist. Es fällt spontan bereits im Zentralablauf der Zentrifuge aus.

Ablagerungen von Magnesiumammoniumphosphat, NH₄MgPO₄ · 6H₂O, treten unter bestimmten Voraussetzungen auf. Insbesondere bei der Entwässerung von Faulschlamm treten häufig Kristallisationen von Magnesiumammoniumphosphat auf und führen zu Problemen durch Ablagerungen in den entsprechenden Entwässerungsaggregaten und nachfolgenden Rohrleitungen, die das Schlammwasser transportieren. Besonders häufig tritt diese Erscheinung bei der Faulschlammentwässerung mittels Zentrifugen auf. Die Kristallisation findet in der Regel nach dem Austritt des Schlammwassers aus der Zentrifuge auf und wird verstärkt durch Ablagerungen von nicht abgeschiedenen Schlammpartikeln. Bei der Zentrifugation wird unter extremem Druck Luft mit Kohlendioxid in der Flüssigphase gelöst. Die spontane Entspannung beim Austritt aus der Zentrifuge verursacht sofortiges Freisetzen des Gases sowie Ammoniak. Der damit verbundene Verlust an Pufferkapazität bewirkt einen pH-Anstieg, damit kommt es zur Ausfällung von Calcium- und Magnesiumsalzen, wobei bei Phosphatkonzentrationen > 60 mg/l und pH 8 Hydroxylapatit Ca₅((PO₄)₃(OH)) und bei Phosphatkonzentrationen >140mg/l ab pH 7 Magnesiumammoniumphosphat ausfällt.

Die bisherigen Methoden Phosphatniederschläge in Kläranlagen aufzulösen oder zu verhindern umfassten die Anwendung verdünnter Essigsäure, Phosphonsäuren oder die Verdünnung der salzführenden Wassermengen und pH-Korrektur mit einem Säuretank.

Die verwendeten Stoffe haben jedoch den Nachteil, dass sie als Säuren aggressive Bedingungen erzeugen und dass sie als Phosphonsäuren nicht biologisch abbaubar sind. In Kläranlagen ist jedoch die biologische Abbaubarkeit von großer Wichtigkeit, da geklärte Wassermengen in natürliche Gewässersysteme geleitet werden.

Es stellte sich also die Aufgabe, einen neuen Belagsverhinderer für stehende und fließende Phosphat-enthaltende Gewässer, bevorzugt für die Landwirtschaft oder für Kläranlagen zu finden, der einerseits unter schonenden Bedingungen, das heißt im neutralen pH-Bereich, bevorzugt pH 5-8 wirksam ist, möglichst alle Arten von Ablagerungen Phoshat-enthaltender Doppelsalze verhindert und dabei möglichst gut biologisch abbaubar ist.

Aus US-A 5 152 902 ist bekannt, dass Polyasparaginsäure als Calciumphosphat-Inhibitor eingesetzt werden kann. Aus EP-A 0 819 653 ist Polyasparaginsäure sowohl als Calciumphosphat-, als auch als Magnesiumphosphat-Inkrustationsinhibitor bekannt.

Die vorliegende Erfindung betrifft deshalb ein Verfahren zur Verhinderung von Inkrustationen Phosphat-enthaltender Doppelsalze in fließenden und stehenden Phosphat-enthaltenden Gewässern, dadurch gekennzeichnet, dass man Polymere mit wiederkehrenden Succinyleinheiten oder deren Teilhydrolysate und/oder deren Natriumoder Kaliumsalze auf Inkrustationen Phosphat-enthaltender, Doppelsalze einwirken lässt oder potentiell zur Bildung von Ablagerungen aus Phosphat-enthaltenden Doppelsalzen fähigem Wasser zusetzt.

Polymere mit wiederkehrenden Succinyleinheiten oder deren Teilhydrolysate und/oder deren Natrium- oder Kaliumsalze im Sinne der vorliegenden Erfindung sind dadurch gekennzeichnet, dass sie Iminodisuccinateinheiten enthalten. Die Iminodissucinateinheiten können als Endgruppe und/oder als wiederkehrende Einheiten vorliegen.

Die erfindungsgemäß einsetzbaren Polymere weisen vorzugsweise wiederkehrende Succinyl-Einheiten mit wenigstens einer der folgenden Strukturen auf 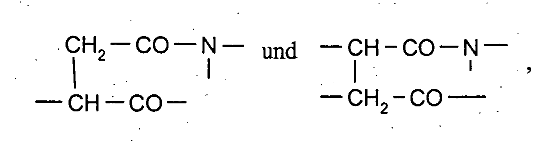 bevorzugt 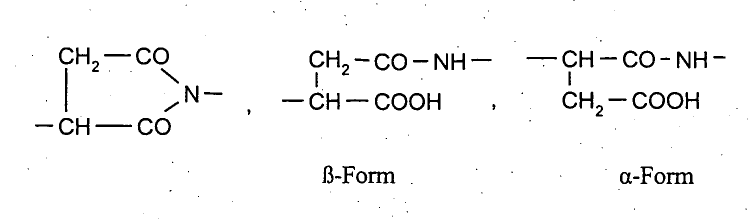 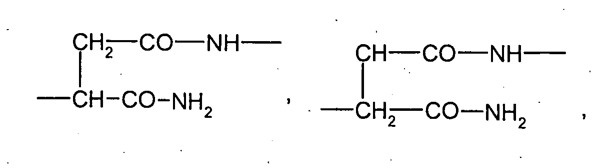 oder eines Salzes, bevorzugt Natrium- oder Kaliumsalzes davon.

Die Iminodissucinateinheiten haben vorzugsweise wenigstens eine der folgenden Strukturen: 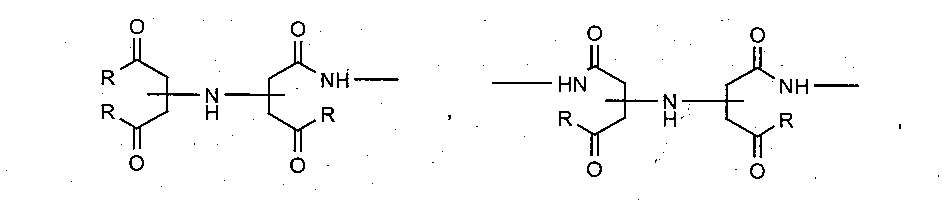 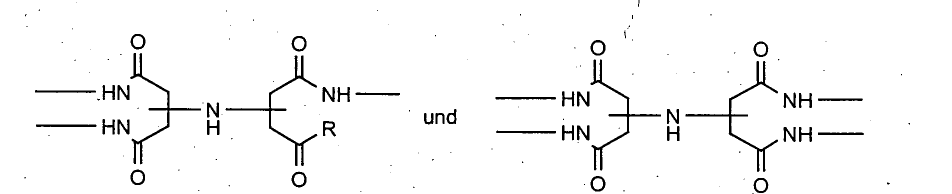 wobei
- R: für die Reste OH, O⁻NH₄⁺ oder NH₂ steht.

Die erfmdungsgemäß einzusetzenden Polymere zeigen in Abhängigkeit von den bei der Herstellung gewählten Reaktionsbedingungen, unterschiedliche Kettenlängen bzw. Molekulargewichte. Erfindungsgemäß eingesetzt werden Polymere mit Mw = 500 bis 10 000, bevorzugt 500 bis 5 000, besonders bevorzugt 700 bis 4 500 aber auch die Verbindung Iminodisuccinat selber. Bezogen auf die Gruppen 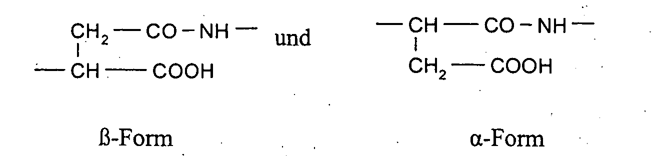 (wiederkehrende Asparaginsäureeinheiten) liegen vorzugsweise wenigstens 50 %, insbesondere wenigstens 70 %, β-verknüpft vor.

Die Iminodisuccinateinheiten können im Polymer statistisch verteilt oder bevorzugt als Endgruppe vorliegen. Bezogen auf die Summe aller wiederkehrenden Einheiten liegt die Iminodisuccinateinheit im allgemeinen zu wenigstens 0,1 Mol-% vor. Das molare Verhältnis der im Polymer eingebauten Iminodisuccinateinheiten zur Summe aller im Polymer eingebauten Monomereinheiten beträgt vorzugsweise 0,1 Mol-% bis 99 Mol-%, bevorzugt 1 Mol-% bis 50 Mol-%, besonders bevorzugt 2 Mol-% bis 25 Mol-%.

Je nach Reaktionsführung können während der Synthese der erfindungsgemäß einzusetzenden Polymere mit wiederkehrenden Succinyleinheiten weitere wiederkehrende Einheiten enthalten sein, z. B.
a) Äpfelsäure-Einheiten der Formel 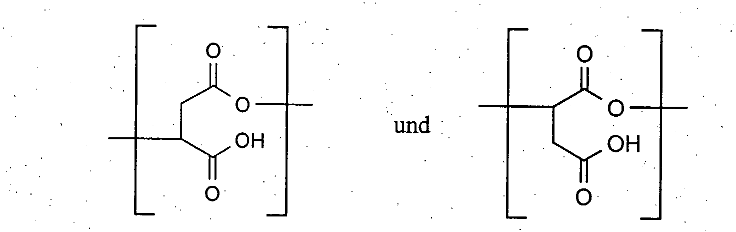
b) Maleinsäure- und Fumarsäure-Einheiten der Formel

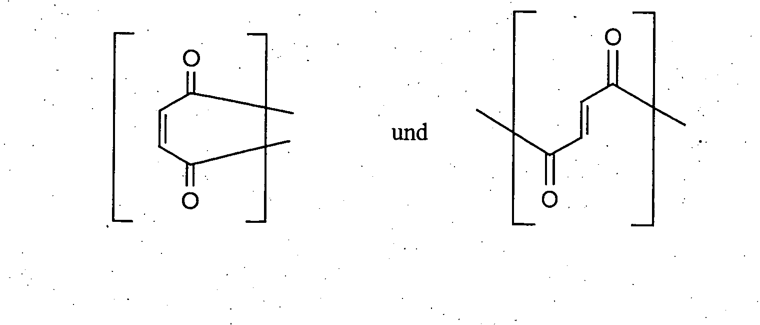

Besonders bevorzugt im Sinne der vorliegenden Erfindung werden Polysuccinimid (PSI) und Polyasparaginsäure gegen Inkrustationen Phosphat-enthaltender Doppelsalze eingesetzt.

PSI kann in großtechnischem Maßstab durch thermische Polymerisation von Maleinsäureanhydrid und Ammoniak oder deren Derivate hergestellt werden (siehe US-A 3 846 380, US-A 5 219 952 oder US-A 5 371 180).

Darüber hinaus erhält man PSI durch thermische Polymerisation von Asparaginsäure (US-A 5 051 401).

PSI fällt bei der chemischen Synthese als Polymer mit einem mittleren Molgewicht von 500 bis 20 000, bevorzugt 3 000 bis 5 000, an. Polysuccinimid ist als chemischer Vorläufer der Polyasparaginsäure zu betrachten, zu der es mit Wasser langsam hydrolysiert. Der pH-Wert der dabei entstehenden Lösung liegt zwischen pH von 1 bis 4, bevorzugt 2 bis 3. Hierdurch kommt nicht nur die gute steinlösende, sondern auch gleichzeitig die dispergierende Wirkung der durch PSI freigesetzten Polyasparaginsäure gegenüber schwerlöslichen Calciumsalzen bzw. anderen schwerlöslichen Stoffen zum Tragen. Die resultierende saure Lösung führt aufgrund ihrer Säurewirkung auch zur direkten Auflösung von Inkrustationen. Vor allem in harten Gebirgswässern mit erhöhtem pH-Wert und damit verschärfter Inkrustationsproblematik zeigt PSI günstigerweise eine erhöhte Löslichkeit. Zudem ist PSI wegen seiner langsamen Hydrolyse bei zugleich geringer Wasserlöslichkeit lange am Einsatzort wirksam und damit dem direkten Einsatz von Polyasparaginsäure deutlich überlegen (slow-release Effekt). Infolgedessen kann über einen längeren Zeitraum die Rückbildung von Phosphat-Inkrustationen vermieden werden, wenn PSI in Dispersionen oder Tabletten eingesetzt wird.

Die direkte Herstellung von Polyasparaginsäuren ausgehend von Maleinsäureanhydrid oder Maleinsäure wird beispielsweise in US-A 5 288 783 beschrieben.

Zur Auflösung der Inkrustationen Phosphat-enthaltender Doppelsalze werden bevorzugt wässrige Lösungen der Polymere mit wiederkehrenden Succinyleinheiten oder deren Teilhydrolysate und/oder deren Salze eingesetzt. Die Polymere mit wiederkehrenden Succinyleinheiten oder deren Teilhydrolysate und/oder deren Salze werden bevorzugt in Konzentrationen zwischen 1 und 100 ppm, bevorzugt zwischen 2 bis 10 ppm angewandt.

Die mittels der erfindungsgemäß einzusetzenden Polymere mit wiederkehrenden Succinyleinheiten oder deren Teilhydrolysate und/oder deren Salze aufzulösenden Inkrustation sind Ablagerungen anorganischer Phosphat-enthaltender Doppelsalze, bevorzugt Hydroxylapatit Ca₅ ((PO₄)₃(OH)) oder Magnesiumammoniumphosphat NH₄MgPO₄·6H₂O.

Bevorzugt ist die Anwendung der erfindungsgemäß einzusetzenden Polymere mit wiederkehrenden Succinyleinheiten oder deren Teilhydrolysate und/oder deren Salze in fließenden oder stehenden Phosphat-Ionen enthaltenden Gewässern, besonders bevorzugt in Kläranlagen oder Anlagen der Landwirtschaft, besonders bevorzugt im neutralen pH-Bereich, ganz besonders bevorzugt bei pH 5 bis 8.

In einer besonders bevorzugten Ausführungsform der vorliegenden Erfindung werden die Polymere mit wiederkehrenden Succiniyleinheiten, deren Teilhydrolysate und/oder deren Salze, bevorzugt Natrium- oder Kaliumsalze, besonders bevorzugt Polysuccinimid in Form von Dispersionen oder Tabletten, gegebenenfalls in Gegenwart weiterer Hilfsstoffe wie Tenside, Bindemittel, Rheologiemodifizierern oder Fäulnisverhinderer, eingesetzt, um eine Slow-Release Wirkung zu erzielen und somit die Anwendung über einen längeren Zeitraum wartungsfrei sicherzustellen und um Rückbildungen der Inkrustation Phosphat-enthaltender Doppelsalze zu verwenden.

Die erfindungsgemäße Anwendung der Polymere mit wiederkehrenden Succinyleinheiten oder deren Teilydrolysate und/oder deren Salze, bevorzugt von Polyasparaginsäure, deren Natriumsalz (PASP) oder PSI zur Verhinderung von Ablagerungen Phosphat-enthaltender Doppelsalze in Kläranlagen sei an folgenden Beispielen illustriert:

### Beispiel 1

Lösung 1 Diammoniumhydrogenphosphat und Ammoniakwasser, jeweils 0,2 molar, Lösung 2 0,2 m Magnesiumchloridlösung.

10 ml der Lösung 1 und 80 ml dest. H₂O wurden vorgelegt. Vor dem Zupumpen von 10 ml der Lösung 2 wurde der pH mit HCl auf pH = 7 eingestellt. Es beginnt ein Niederschlag aus Magnesiumammoniumphosphat ("MAP") zu fallen.

Diese Lösung wurde in geschlossenen Flaschen bei Raumtemperatur über Nacht aufbewahrt, ohne Zusatz bzw. mit 10 bzw. 100 ppm Polyasparaginsäure-Natriumsalz (PASP).

Am nächsten Morgen wurde 5 ml mittels Spritze entnommen, filtriert und mit 0,1 m Titriplexlösung in Lösung befindliche Magnesiumionen zurücktitriert.

### Verbräuche:

| | | |
|---|---|---|
| Ohne Zusatz | 10 ppm PASP | 100 ppm PASP |
| 0,454 mmol | 0,768 mmol | 0,796 mmol |

Ursprüngliche Menge in den 5 ml: 1 mmol

Daraus ergibt sich, das die Magnesiumhärte bei Aufbewahrung bei RT unter Zusatz von PASP ca. 70 % höher lag.

### Beispiel 2

Lösung 1 Diammoniumhydrogenphosphat und Ammoniakwasser, jeweils 0,2 molar, Lösung 2 0,2 m Calciumchloridlösung

10 ml der Lösung 1 und 80 ml dest. H₂O wurden vorgelegt. Vor dem Zupumpen von 10 ml der Lösung 2 wurde der pH auf pH = 8 eingestellt. Es beginnt ein Niederschlag aus Hydroxylapatit (HAP) zu fallen.

Diese Lösung wurde in geschlossenen Flaschen bei Raumtemperatur über Nacht aufbewahrt, ohne Zusatz bzw. mit 10 bzw. 100 ppm Polyasparaginsäure-Natriumsalz (PASP).

Am nächsten Morgen wurden 5 ml mittels Spritze entnommen, filtriert und mit 0,1 m Titriplexlösung in Lösung befindliche Calciumionen zurücktitriert.

### Verbräuche:

| | | |
|---|---|---|
| Ohne Zusatz | 10 ppm PASP | 100 ppm PASP |
| 0,374 mmol | 0, 801 mmol | 0,884 mmol |

Ursprüngliche Menge in den 5 ml: 1 mmol

Daraus ergibt sich, das die Calciumhärte bei Aufbewahrung bei Raumtemperatur unter Zusatz von PASP ca. 115 % höher lag.

### Beispiel 3

Ein Brocken einer gut kristallisierten Ablagerung von MAP aus einer kommunalen Kläranlage wurde 2 Tage unter Rühren in eine Dispersion aus PSI gelegt.
Anfangsgewicht: 11,29 g
Nach 2 Tagen: 7,45 g
Dies entspricht einer Gewichtsabnahme von 3,84 g oder 34 %.

### Beispiel 4

In einer kommunalen Kläranlage wurde die Inkrustation durch Magnesiumammoniumphosphat anhand von 4 x 7 cm Edelstahl und Aluminiumbleche, die in den Zentralkreislauf (nach der Schlammabtrennung durch eine Zentrifuge) eingehängt wurden, verfolgt. Die Gewichtszunahme der Metallstreifen durch Magnesiumammoniumphosphat betrug innerhalb eines Zeitraumes von 10 Tagen 0,8 g.

Durch die Dosierung der erfindungsgemäßen Polymere (mit wiederkehrenden Succinyleinheiten) in der Menge von 26 ppm wurde die Bildung von Ablagerungen innerhalb des 10 Tages-Fensters auf ca. 0,05 g Magnesiumammoniumphosphat reduziert.

## Patentansprüche

1. Verfahren zur Verhindung von Inkrustationen Phosphat-enthaltender Doppelsalze aus stehenden oder fließenden Phosphat-Ionen enthaltenden Gewässern, **dadurch gekennzeichnet, dass** Polymere mit wiederkehrenden Succinyleinheiten, deren Teilhydrolysate und/oder deren Salze eingesetzt werden.

2. Verfahren gemäß Anspruch 1, **dadurch gekennzeichnet, dass** Polyasparaginsäure oder Polysuccinimid und/oder deren Salze verwendet wird.

3. Verfahren gemäß Anspruch 1, **dadurch gekennzeichnet, dass** die Polymere mit wiederkehrenden Succinyleinheiten, deren Teilhydrolysate und/oder deren Salze, bevorzugt Polyasparaginsäure oder Polysuccinimid, in Konzentrationen zwischen 1 und 100 ppm angewandt werden.

4. Verfahren gemäß der Ansprüche 1 bis 3, **dadurch gekennzeichnet, dass** die Inkrustationen aus Hydroxylapatit oder Magnesiumammoniumphosphat bestehen.

5. Verfahren zur Vermeidung der Rückbildung von Inkrustationen Phosphat-enthaltender Doppelsalze, **dadurch gekennzeichnet, dass** Polysuccinimid oder Polyasparaginsäure in Form von Dispersionen oder Tabletten eingesetzt wird.
